# EUROPÄISCHE PATENTSCHRIFT

(11) **EP 4 039 161 B1**
(45) Veröffentlichungstag und Bekanntmachung des Hinweises auf die Patenterteilung: **14.06.2023**
(21) Anmeldenummer: 22154561.9
(22) Anmeldetag: 01.02.2022
(51) Int. Cl.: A47L 11/40, A47L 9/28

(54) **SYSTEM ZUM REINIGEN EINER UMGEBUNG**
ENVIRONMENT CLEANING SYSTEM
SYSTÈME DE NETTOYAGE D'UN ENVIRONNEMENT

(30) Priorität: 04.02.2021 DE 102021102654
(43) Veröffentlichungstag der Anmeldung: 10.08.2022
(73) Patentinhaber: Vorwerk & Co. Interholding GmbH, 42275 Wuppertal (DE)
(72) Erfinder: Mosebach, Andrej, 59425 Unna (DE); Hayn, Henning, 40723 Hilden (DE)
(74) Vertreter: Müller, Enno

(56) Entgegenhaltungen:
- DE-A1-102014 113 040
- DE-A1-102017 113 285
- DE-A1-102017 118 382
- DE-A1-102019 101 338
- US-A1- 2014 207 281

## Beschreibung

### Gebiet der Technik

Die Erfindung betrifft ein System zum Reinigen einer Umgebung, mit mindestens einem sich selbsttätig fortbewegenden Reinigungsgerät, welches eine Statusdetektionseinrichtung zur Detektion eines Betriebsstatus des Reinigungsgerätes aufweist, mindestens einer Umgebungsdetektionseinrichtung zur Detektion eines Umgebungsparameters der Umgebung, einer Recheneinrichtung zum Definieren einer auszuführenden Arbeitstätigkeit in Abhängigkeit von dem detektierten Umgebungsparameter und/ oder dem detektierten Betriebsstatus, und einer Datenbank zur Speicherung der auszuführenden Arbeitstätigkeit.

### Stand der Technik

Systeme der vorgenannten Art sind im Stand der Technik bekannt. Das System weist ein oder mehrere autonome Reinigungsgeräte, insbesondere sogenannte Reinigungsroboter, auf. Bei diesen handelt es sich beispielsweise um Bodenbearbeitungsgeräte, insbesondere, Saugreinigungsgeräte, mit einem Gebläse zum Aufsaugen von Staub und Schmutz von einer zu reinigenden Fläche, oder Feuchtreinigungsgeräte mit einem Wischelement zum Feuchtwischen einer zu reinigenden Fläche.

Das Reinigungsgerät weist üblicherweise eine Statusdetektionseinrichtung auf, mit welcher ein aktueller Betriebsstatus des Reinigungsgerätes detektiert werden kann. Der Betriebsstatus kann beispielsweise ein Ladestand eines Akkumulators, ein blockierter Zustand eines Antriebsrades des Reinigungsgerätes, oder ein blockierter Zustand eines Reinigungselementes, beispielsweise einer rotierenden Reinigungswalze oder eines schwingenden Wischelementes, sein. Ein weiterer wichtiger Betriebsstatus des Reinigungsgerätes ist beispielsweise das Auftreten einer sogenannten Havariesituation, in welcher das Reinigungsgerät in einem Umgebungsteilbereich feststeckt, beispielsweise zwischen einander nahestehenden Hindernissen, auf einer Türschwelle, einer Teppichkante oder ähnlichem. Das Reinigungsgerät kann des Weiteren als Umgebungsdetektionseinrichtung des Systems einen Schmutzsensor aufweisen, welcher eingerichtet ist, einen Verschmutzungsstatus eines Umgebungsteilbereiches der Umgebung zu detektieren. Die Umgebungsdetektionseinrichtung muss jedoch nicht zwangsläufig Bestandteil des Reinigungsgerätes sein, sondern kann auch eine separat zu dem Reinigungsgerät ausgebildete Detektionseinrichtung sein. Die Umgebungsdetektionseinrichtung kann alternativ zu der vorgenannten Verschmutzung auch andere Umgebungsparameter detektieren, beispielsweise eine Anwesenheit von Personen in der Umgebung, einen Aktivitätszustand einer Beleuchtung, einen Öffnungszustand von Fenster und/oder Türen und ähnliche.

Es ist bekannt, anhand der detektierten Umgebungsparameter sowie des Betriebsstatus des Reinigungsgerätes einen Tätigkeitsplan zu definieren, welcher auszuführende Arbeitstätigkeiten enthält. Beispielsweise kann der Tätigkeitsplan eine Reinigung in einem bestimmten Umgebungsteilbereich, eine Fahrt zu einer Ladestation oder ähnliches festlegen.

Das Dokument DE 10 2019 101338 A1 beschreibt ein System zum Reinigen einer Umgebung mit mindestens einem sich selbsttätig fortbewegenden Reinigungsgerät nach dem Oberbegriff des unabhängigen Anspruchs 1.

### Zusammenfassung der Erfindung

Obwohl sich die im Stand der Technik bekannten Systeme zum Reinigen einer Umgebung bewährt haben, ist es Aufgabe der Erfindung, auch eine insbesondere gewerbliche oder industrielle Umgebung optimal zu reinigen, wobei eine Vielzahl von Arbeitstätigkeiten auszuführen sind, die üblicherweise zu einem Anteil auch von Reinigungspersonal manuell auszuführen sind, beispielsweise das Entleeren von Papierkörben, das Nachlegen von Verbrauchsmaterial an dafür vorgesehenen Orten der Umgebung und dergleichen. Insbesondere ist es Aufgabe der Erfindung, die Verteilung von Arbeitsaufgaben vollautomatisch zu planen, so dass die Entscheidung darüber, wann welche Tätigkeiten auszuführen sind, nicht manuell von beispielsweise Personal eines Reinigungsunternehmens vorgenommen werden muss.

Zur Lösung dieser Aufgabe wird vorgeschlagen, dass das System eine mit der Recheneinrichtung in Kommunikationsverbindung stehende Eingabe-Ausgabe-Schnittstelle aufweist, welche eingerichtet ist, mindestens einen, eine auszuführende Arbeitstätigkeit betreffenden Arbeitsauftrag von einem Nutzer des Systems zu empfangen, wobei die Recheneinrichtung eingerichtet ist, eine Gesamtheit der anhand der Umgebungsparameter und/oder Betriebsstatus definierten Arbeitstätigkeiten und der über die Eingabe-Ausgabe-Schnittstelle empfangenen Arbeitsaufträge im Hinblick auf einen Ausführungszeitpunkt der auszuführenden Arbeitstätigkeiten zu analysieren und einen Arbeitsplan, welcher von einem Nutzer in einem bestimmten Zeitabschnitt manuell auszuführende Arbeitstätigkeiten definiert, zu erstellen und mittels der Eingabe-Ausgabe-Schnittstelle an den Nutzer auszugeben, wobei die Recheneinrichtung eingerichtet ist, die Gesamtheit der Arbeitstätigkeiten zu filtern und eine erste Tätigkeitsmenge zu definieren, welche mindestens eine von dem mindestens einen Reinigungsgerät automatisch ausführbare Arbeitstätigkeit umfasst, und eine zweite Tätigkeitsmenge zu definieren, welche mindestens eine ausschließlich manuell durch einen Nutzer auszuführende Arbeitstätigkeit umfasst.

Erfindungsgemäß ist die Recheneinrichtung des Systems nun ausgebildet, die Vielzahl von unterschiedlichen auszuführenden Arbeitstätigkeiten zu analysieren, insbesondere auch in Bezug auf ihre zeitliche Dringlichkeit zu bewerten und automatisch einen Arbeitsplan zu erstellen, welcher einem Nutzer Informationen darüber an die Hand gibt, welche Arbeitstätigkeiten in einem bestimmen Zeitraum, beispielsweise an einem bestimmten Tag, innerhalb der nächsten zwei Stunden, oder in anderen Zeitfenstern, auszuführen sind, so dass der Nutzer lediglich noch den erstellten Arbeitsplan abarbeiten muss. Der Nutzer selbst muss nicht mehr entscheiden, welche Arbeitstätigkeiten als nächstes ausgeführt werden sollen.

Die Recheneinrichtung ist eingerichtet, die Gesamtheit der Arbeitstätigkeiten zu filtern und eine erste Tätigkeitsmenge zu definieren, welche mindestens eine von dem mindestens einen Reinigungsgerät automatisch ausführbare Arbeitstätigkeit umfasst, und eine zweite Tätigkeitsmenge zu definieren, welche mindestens eine ausschließlich manuell durch einen Nutzer auszuführende Arbeitstätigkeit umfasst. Die Recheneinrichtung ist somit eingerichtet, vollautomatisch und selbständig zu ermitteln, welche Arbeitstätigkeiten ausschließlich von einem Nutzer manuell ausgeführt werden können, weil die in das System eingebundenen Reinigungsgeräte entweder nicht geeignet sind, die Reinigungstätigkeit automatisch auszuführen, oder weil die Situation nicht erlaubt, dass eines der Reinigungsgeräte diese Arbeitstätigkeit ausführt, beispielsweise weil ein Betriebsstatus des Reinigungsgerätes derzeit einen Fehler angibt, das Reinigungsgerät grundsätzlich nicht zur Ausführung der Arbeitstätigkeit ausgebildet ist, oder ähnliches. Ebenso ist die Recheneinrichtung ausgebildet, durch eines oder mehrere der Reinigungsgeräte automatisch ausführbare Arbeitstätigkeiten zu erkennen, wenn das Reinigungsgerät eine entsprechende Fähigkeit bzw. Ausbildung und einen entsprechenden momentanen Bereitschaftszustand (Betriebszustand) aufweist. Das System ermöglicht somit eine vollautomatische Analyse von geplanten Arbeitstätigkeiten und manuell in das System eingegebenen Arbeitsaufträgen sowie eine Klassifikation in manuelle und automatische Tätigkeiten. Der über die Eingabe-Ausgabe-Schnittstelle des Systems ausgegebene Arbeitsplan kann dabei unterteilt sein in einerseits manuelle Arbeitstätigkeiten und andererseits automatische Arbeitstätigkeiten. Des Weiteren ist es jedoch auch möglich, dass der Arbeitsplan eine vorrangig zeitliche Wichtung der Arbeitstätigkeiten vornimmt und somit diejenige Arbeitstätigkeit als erste enthält, welche als erstes auszuführen ist, unabhängig davon, ob es sich dabei um eine manuell auszuführende oder eine automatisch auszuführende Arbeitstätigkeit handelt. Besonders vorteilhaft enthält der Arbeitsplan jedoch ausschließlich manuell auszuführende Arbeitstätigkeiten, die von einem Nutzer manuell auszuführen sind. Die automatisch ausführbaren Arbeitstätigkeiten kann die Recheneinrichtung unmittelbar, ohne vorherige Information des Nutzers, in einen Steuerbefehl für ein Reinigungsgerät umwandeln, wobei der Steuerbefehl vorzugsweise erst dann zu der Ausführung der Arbeitstätigkeit führt, wenn der dafür definierte Ausführungszeitpunkt erreicht ist.

Des Weiteren wird vorgeschlagen, dass die Datenbank des Systems eine Datei aufweist, in welcher Referenztätigkeiten für manuell auszuführende Arbeitstätigkeiten und Referenztätigkeiten für automatisch ausführbare Arbeitstätigkeiten gespeichert sind, wobei die Recheneinrichtung eingerichtet ist, eine auszuführende Arbeitstätigkeit mit den gespeicherten Referenztätigkeiten zu vergleichen und bei Übereinstimmung der Arbeitstätigkeit mit einer der Referenztätigkeiten auf eine manuell auszuführende Arbeitstätigkeit oder eine automatisch ausführbare Arbeitstätigkeit zu schließen. Als eine Referenztätigkeit für eine manuell auszuführende Arbeitstätigkeit kann beispielsweise das Entleeren von Mülleimern, Papierkörben und dergleichen vorgesehen sein. Manuell auszuführende Arbeitstätigkeiten sind des Weiteren das Auffüllen von Verbrauchsmaterial in der Umgebung, beispielsweise das Nachfüllen von Seife, Kopierpapier, Kaffeekapseln, Toilettenpapier, Reinigungsmittel und dergleichen. Zu den manuell auszuführenden Arbeitstätigkeiten können des Weiteren auch an einem Reinigungsgerät auszuführende Wartungs- und/oder Reparaturtätigkeiten gehören, beispielsweise das Austauschen eines Reinigungselementes, die Reinigung eines Filters, das Tragen des Reinigungsgerätes in ein anderes Stockwerk und dergleichen. Referenztätigkeiten für automatisch ausführbare Arbeitstätigkeiten können beispielsweise solche sein, die eine Tätigkeit beschreiben, für welche eines der Reinigungsgeräte des Systems ausgebildet ist, beispielsweise eine Saugtätigkeit oder Wischtätigkeit in einem hindernisfreien Bereich der Umgebung, die Übergabe von gesammeltem Staub und Schmutz an eine dafür vorgesehene Basisstation, der Empfang von Zubehör oder Reinigungsmitteln von einer Basisstation.

Des Weiteren wird vorgeschlagen, dass die Recheneinrichtung eingerichtet ist, den Nutzer mittels der Eingabe-Ausgabe-Schnittstelle zu einer ausschließlich manuell auszuführenden Arbeitstätigkeit aufzufordern. Sobald insbesondere ein Startzeitpunkt für eine Arbeitstätigkeit erreicht ist, kann der Nutzer darüber informiert werden, dass die manuelle Arbeitstätigkeit nun auszuführen ist. In einer besonders einfachen Form erfolgt diese Aufforderung über den Arbeitsplan, welcher unter anderem auch eine Vielzahl weiterer geplanter Arbeitstätigkeiten aufweisen kann. Des Weiteren ist es jedoch auch möglich, dass der Nutzer speziell nur über eine einzige manuell auszuführende Arbeitstätigkeit informiert wird. Dies kann unabhängig von einem Arbeitsplan dann beispielweise durch die Anzeige einer Aufforderung auf einem Display, mittels einer Sprachausgabe oder ähnlichem erfolgen.

Es kann des Weiteren vorgesehen sein, dass die Recheneinrichtung eingerichtet ist, eine automatisch auszuführende zweite Arbeitstätigkeit des Reinigungsgerätes in Abhängigkeit von einem aufgrund einer von einem Nutzer durchgeführten ersten Arbeitstätigkeit geänderten Umgebungsparameter anzupassen. Sofern der Nutzer beispielsweise manuell in eine Umgebung eingreift, insbesondere wenn diese Tätigkeit nicht durch den definierten Arbeitsplan vorgegeben ist, kann es erforderlich sein, die weiteren in dem Arbeitsplan definierten zeitlich folgenden Arbeitstätigkeiten anzupassen, um beispielsweise eine Reinigungsaufgabe nicht doppelt auszuführen. Zu diesem Zweck detektiert die Umgebungsdetektionseinrichtung relevante Umgebungsparameter der Umgebung, beispielsweise einen Verschmutzungszustand der Umgebung, einen Füllstand von Verbrauchsmaterial und dergleichen. Sobald festgestellt wird, dass eine Arbeitstätigkeit bereits ausgeführt ist, kann der zuvor definierte Arbeitsplan so angepasst werden, dass die entsprechende Arbeitstätigkeit aus dem Arbeitsplan gelöscht wird oder eine andere Zeitdauer, Arbeitsintensität oder Wiederholungsfrequenz für diese Arbeitstätigkeit definiert wird. Ebenso kann jedoch auch eine manuelle Arbeitstätigkeit aus dem Arbeitsplan gelöscht oder angepasst werden, wenn festgestellt wird, dass der Nutzer die Arbeitstätigkeit zuvor schon unplanmäßig ausgeführt hat. Dies kann beispielsweise vorteilhaft sein, wenn mehrere Reinigungskräfte in einer Umgebung aktiv sind und deren Verhalten nicht aufeinander abgestimmt ist, d. h. nicht dem definierten Arbeitsplan folgt.

Die Recheneinrichtung des Systems kann des Weiteren eingerichtet sein, in Abhängigkeit von einem aktuellen Betriebsstatus des Reinigungsgerätes eine manuell auszuführende Arbeitstätigkeit von einem Nutzer anzufordern, indem die Recheneinrichtung die Eingabe-Ausgabe-Schnittstelle zur Ausgabe einer Aufforderung zur Ausführung der manuellen Arbeitstätigkeit veranlasst. Diese Ausführung betrifft manuell auszuführende Arbeitstätigkeiten, welche durch einen aktuellen Betriebsstatus des Reinigungsgerätes bedingt sind. Bei dem Betriebsstatus kann es sich beispielsweise um einen Havariestatus oder Fehlerstatus des Reinigungsgerätes handeln, bei welchem Hilfe durch den Nutzer erforderlich ist, um das Reinigungsgerät beispielsweise aus einer festgefahrenen Situation zu befreien, das Reinigungsgerät an einen anderen Ort zu tragen, beispielsweise an eine Ladestation bei vollständig entladenem Akkumulator des Reinigungsgerätes, oder in ein anderes Stockwerk, welches das Reinigungsgerät nicht selbsttätig erreichen kann. Ein anderer Betriebsstatus des Reinigungsgerätes, welcher ebenso ein manuelles Eingreifen des Nutzers erfordert, kann beispielsweise eine Wartungstätigkeit wie ein Reinigen eines Filters, Staubsammelbehälters oder Reinigungselementes sein, das Nachfüllen einer Reinigungsflüssigkeit oder ähnliches. Die Eingabe-Ausgabe-Schnittstelle kann die Aufforderung für die Wartungstätigkeit insbesondere optisch oder akustisch ausgeben, insbesondere auch unabhängig von dem definierten Arbeitsplan.

Insbesondere kann die manuell auszuführende Arbeitstätigkeit somit eine Servicetätigkeit für das Reinigungsgerät sein, insbesondere ein Bereitstellen von Verbrauchsmaterial in der Umgebung oder eine Übergabe von Verbrauchsmaterial an das Reinigungsgerät, eine Annahme von durch das Reinigungsgerät in der Umgebung gesammeltem Material, ein Befreien des Reinigungsgerätes aus einer festgefahrenen Position, ein Tragen des Reinigungsgerätes zu einer Basisstation, ein Wechseln oder Reinigen einer Komponente des Reinigungsgerätes.

Des Weiteren kann die manuell auszuführende Arbeitstätigkeit eine Reinigungstätigkeit zur Reinigung der Umgebung sein, insbesondere eine Reinigung einer Überbodenfläche und/oder eine Reinigung einer für das Reinigungsgerät nicht zugänglichen Fläche. Diese manuell auszuführenden Arbeitstätigkeiten betreffen Reinigungstätigkeiten, welche das zumindest eine Reinigungsgerät des Systems nicht ausführen kann, beispielsweise weil der korrespondierende Umgebungsbereich, in welchem die Arbeitstätigkeit auszuführen ist, durch das Reinigungsgerät nicht erreichbar ist. Dies betrifft insbesondere Überbodenflächen wie Sockelleisten, Regalböden oder ähnliches.

Gemäß einer weiteren Ausführung kann vorgesehen sein, dass die Umgebungsdetektionseinrichtung eingerichtet ist, als Umgebungsparameter eine momentan stattfindende Nutzung zumindest eines Ortes der Umgebung zu detektieren. Bei einer Nutzung eines oder mehrerer Umgebungsteilbereiche der Umgebung kann auf ein Reinigungserfordernis in dem jeweiligen Umgebungsteilbereich geschlossen werden. Sofern ein Umgebungsteilbereich überhaupt nicht benutzt wurde, kann eine Reinigung in diesem Umgebungsteilbereich entfallen. Im Gegensatz dazu können lang und/oder intensiv genutzte Umgebungsteilbereiche bevorzugt in dem Arbeitsplan berücksichtigt werden, so dass eine Reinigung dieser zeitlich zuerst oder mit höherer Ausführungsfrequenz ausgeführt wird.

Insbesondere in diesem Zusammenhang wird vorgeschlagen, dass die Umgebungsdetektionseinrichtung einen Anwesenheitssensor und/oder einen Bewegungssensor und/oder einen Durchgangssensor und/oder einen Ortungssensor für Mobilgeräte aufweist. Die Nutzungsdaten beinhalten somit Informationen über eine Präsenz einer oder mehrerer Personen in einem mit der Umgebungsdetektionseinrichtung ausgestatteten Umgebungsteilbereich der Umgebung, wobei eine Präsenz gekennzeichnet sein kann durch eine Anwesenheit einer Person, eine Fortbewegung der Person durch den Umgebungsteilbereich oder eine Fortbewegung einer Person in den Umgebungsteilbereich hinein oder aus dem Umgebungsteilbereich heraus. Die Umgebungsdetektionseinrichtung kann beispielsweise einen Bewegungssensor aufweisen, wie er bei Beleuchtungseinrichtungen mit Bewegungssensor bekannt ist. Darüber hinaus kann die Umgebungsdetektionseinrichtung auch einen Wärmesensor, beispielsweise Infrarotsensor, aufweisen, welcher die Anwesenheit einer Person in einem Umgebungsteilbereich detektieren kann. Auch können beispielsweise Lichtschranken im Bereich einer Zugangstür zu einem bestimmten Umgebungsteilbereich eingesetzt werden. Des Weiteren ist es möglich, dass Mobilgeräte, die eine Person üblicherweise mit sich trägt, geortet werden. Solche Mobilgeräte können beispielsweise Mobiltelefone, Tablet-Computer oder ähnliches sein. Anhand der Ortungsdaten der mobilen Endgeräte kann eine sogenannte "Heatmap" erstellt werden, welche eine Fortbewegungsroute der jeweiligen Person durch die Umgebung beinhaltet. Die Umgebungsdetektionseinrichtung kann separat ausgebildete und in einem oder mehreren Umgebungsteilbereichen der Umgebung platzierte Sensoren aufweisen, oder Sensoren, welche in andere Objekte der Umgebung integriert sind. Beispielsweise kann ein Sensor in eine Lampe integriert sein, welche Teil einer automatisierten Lichtsteuerung von zum Beispiel Büroräumen ist.

### Kurze Beschreibung der Zeichnungen

Im Folgenden wird die Erfindung anhand von Ausführungsbeispielen näher erläutert. Es zeigen:
- Fig. 1: einen Teil eines erfindungsgemäßen Systems zum Reinigen einer Umgebung;
- Fig. 2: einen Grundriss einer Umgebung mit einem System zum Reinigen einer Umgebung;
- Fig. 3: eine Datei mit einer Mehrzahl von durch einen Nutzer an das System übermittelten Arbeitsaufträgen;
- Fig. 4: eine Datei mit Reinigungsgeräten des Systems zugeordneten Informationen;
- Fig. 5: eine Datei mit einer Wartungstabelle für ein Reinigungsgerät;
- Fig. 6: eine Datei mit in Abhängigkeit von einer Benutzung eines bestimmten Ortes der Umgebung auszuführenden Arbeitstätigkeiten;
- Fig. 7: einen Arbeitsplan mit manuell auszuführenden Arbeitstätigkeiten.

### Beschreibung der Ausführungsformen

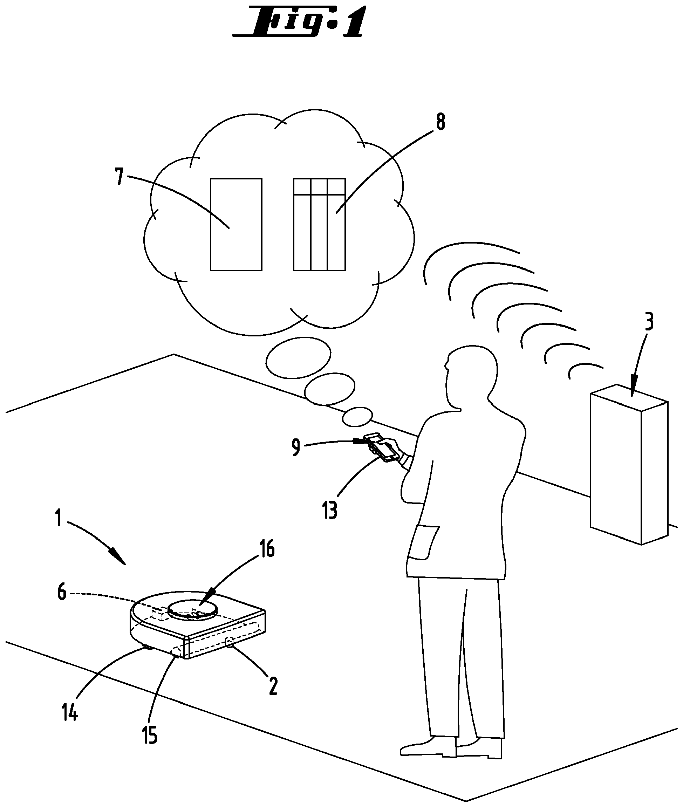

Figur 1 zeigt beispielhaft einen Ausschnitt eines Systems zum Reinigen einer Umgebung. Das System beinhaltet zumindest ein (hier rein exemplarisch dargestelltes) Reinigungsgerät 1. Das System kann eine Mehrzahl weiterer Reinigungsgeräte 1 aufweisen. Die Reinigungsgeräte 1 können gleichartig oder unterschiedlich ausgebildet sein. Darüber hinaus beinhaltet das System eine Recheneinrichtung 7 und eine Datenbank 8, auf welche die Recheneinrichtung 7 zugreift. Die Recheneinrichtung 7 und die Datenbank 8 sind hier beispielhaft zentral in einem entfernten Server ausgebildet, insbesondere einem sogenannten Cloud-Server. Das Reinigungsgerät 1 bzw. die Reinigungsgeräte 1 des Systems verfügen über nicht dargestellte Kommunikationseinrichtungen zur Herstellung einer Kommunikationsverbindung mit der Recheneinrichtung 7 des Systems. Insbesondere kann das jeweilige Reinigungsgerät 1 ein WLAN-Modul aufweisen. Auch andere drahtlose Kommunikationstechniken sind zur Datenübertragung möglich. Zu dem System gehört des Weiteren ein externes Endgerät 13, über welches ein Nutzer des Systems Eingaben machen kann. Das externe Endgerät 13 kann insbesondere ein mobiles Endgerät, wie beispielsweise ein Mobiltelefon, ein Tablet-Computer oder ähnliches, sein. Das externe Endgerät 13 verfügt über eine Eingabe-Ausgabe-Schnittstelle 9, beispielsweise ein Touchscreen, welches Eingaben von dem Nutzer empfangen kann bzw. Ausgaben an den Nutzer tätigen kann. Zu dem System gehört des Weiteren zumindest eine Umgebungsdetektionseinrichtung 2, 3, 4, 5, welche ausgebildet ist, einen Umgebungsparameter 17 der Umgebung zu detektieren. Dies wird später noch weiter erläutert.

Das mindestens eine Reinigungsgerät 1 ist hier beispielsweise als autonomer Saugroboter ausgebildet. Das Reinigungsgerät 1 weist motorisch angetriebene Räder 14 sowie eines oder mehrere Reinigungselemente 15 auf, welche vorzugsweise ebenfalls motorisch angetrieben sein können. Hier hat das Reinigungsgerät 1 beispielsweise ein als Reinigungswalze ausgebildetes Reinigungselement 15, welches um eine im Wesentlichen horizontale Achse rotiert und auf einer zu reinigenden Fläche abrollt. Des Weiteren verfügt das Reinigungsgerät 1 über eine eigene Umgebungsdetektionseinrichtung 2, welche eingerichtet ist, einen Umgebungsparameter 17 der Umgebung zu detektieren. Hier handelt es sich bei dem Umgebungsparameter 17 beispielsweise um einen Verschmutzungszustand einer zu reinigenden Fläche. Eine Statusdetektionseinrichtung 6 des Reinigungsgerätes 1 ist ausgebildet, einen Betriebsstatus 18 des Reinigungsgerätes 1 zu detektieren. Der Betriebsstatus 18 kann beispielsweise eine Blockade des Rades 14 oder des Reinigungselementes 15 sein, ein Ladestatus eines nicht dargestellten Akkumulators des Reinigungsgerätes 1, ein festgefahrener Zustand des Reinigungsgerätes 1 an einem Ort 22 der Umgebung, beispielsweise ein Festfahren zwischen eng benachbarten Hindernissen oder dergleichen. Zur selbsttätigen Navigation und Fortbewegung des Reinigungsgerätes 1 in der Umgebung verfügt das Reinigungsgerät 1 über eine Navigationseinrichtung 16, welche eingerichtet ist, Eigenschaften der Umgebung zu detektieren und diese zur Navigation sowie Selbstlokalisierung des Reinigungsgerätes 1 in der Umgebung zu verwenden. Die Navigationseinrichtung 16 kann beispielsweise eine Abstandsmesseinrichtung, beispielsweise ein optisches Messsystem, insbesondere ein Triangulationssystem, aufweisen, welches geeignet ist, Abstände zu Hindernissen in der Umgebung zu messen, und eine Datenverarbeitungseinrichtung, welche eingerichtet ist, anhand der gemessenen Abstandswerte einen Grundriss der Umgebung, insbesondere in Form einer Umgebungskarte, zu erstellen.

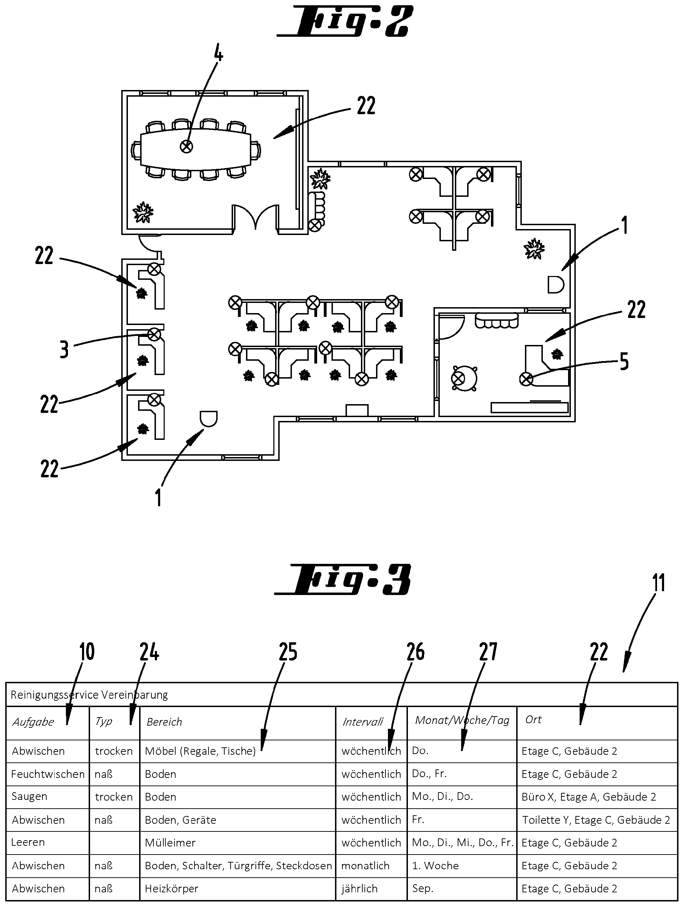

Figur 2 zeigt beispielhaft einen Grundriss einer Umgebung, welche durch ein erfindungsgemäßes System gereinigt wird. Das System beinhaltet mehrere Reinigungsgeräte 1 sowie, neben der geräteeigenen Umgebungsdetektionseinrichtung 2 der Reinigungsgeräte 1, mehrere weitere Umgebungsdetektionseinrichtungen 3, 4, 5, welche Umgebungsparameter 17 der Umgebung detektieren können. Die Umgebungsdetektionseinrichtungen 3, 4, 5 sind hier eingerichtet, als Umgebungsparameter 17 eine Benutzung des der jeweiligen Umgebungsdetektionseinrichtung 3, 4, 5 zugeordneten Ortes 22 zu ermitteln, indem beispielsweise eine Anwesenheit einer Person, eine Bewegung an dem jeweiligen Ort 22 oder eine Anwesenheit eines getrackten Mobilgerätes an dem jeweiligen Ort 22 detektiert wird. Des Weiteren kann die Umgebungsdetektionseinrichtung 3, 4, 5 alternativ oder zusätzlich auch einen Durchgangssensor aufweisen, welcher einen Zugang zu dem jeweiligen Ort 22 überwacht. Anhand der ermittelten Nutzung des jeweiligen Ortes 22 kann dann ein Reinigungserfordernis an dem jeweiligen Ort 22 abgeleitet werden, wobei Orte 22, an welchen keine Benutzung stattgefunden hat, entsprechend auch nicht gereinigt werden müssen. Wird hingegen festgestellt, dass ein Ort 22 genutzt wurde oder zumindest Personen dort anwesend waren, kann vorteilhaft eine Reinigung dieses Ortes 22 erfolgen.

In der Umgebung können eine Vielzahl unterschiedlicher Arbeitstätigkeiten 10 erforderlich sein, die durch ein autonomes Reinigungsgerät 1 und/ oder manuell durch Nutzer bzw. eine Reinigungsfachkraft ausgeführt werden können. Insbesondere im Bereich von gewerblichen oder industriellen Umgebungen, beispielsweise Bürokomplexen, ist es bekannt, ein professionelles Reinigungsunternehmen zu beauftragen, um diverse Arbeitstätigkeiten 10 durchzuführen. Zu diesen Arbeitstätigkeiten 10 zählen beispielsweise die Reinigung einer Bodenfläche an verschiedenen Orten 22 der Umgebung, eine Reinigung von Überbodenflächen, wie beispielsweise Möbeloberfläche, Fußleisten oder Fensterbänke. Auszuführende Arbeitstätigkeiten 10 sind des Weiteren das Ausleeren von Papierkörben und Mülleimern, das Nachfüllen von Verbrauchsmaterial, wie beispielsweise Seife oder Toilettenpapier in einem WC-Raum, oder Wartungstätigkeiten an einem oder mehreren Reinigungsgeräten 1, sofern diese zeitlich fällig sind. Wartungstätigkeiten sind beispielsweise eine Reinigung oder ein Austausch eines Filters des Reinigungsgerätes 1, ein Entleeren eines Staubsammelbehälters des Reinigungsgerätes 1 oder dergleichen.

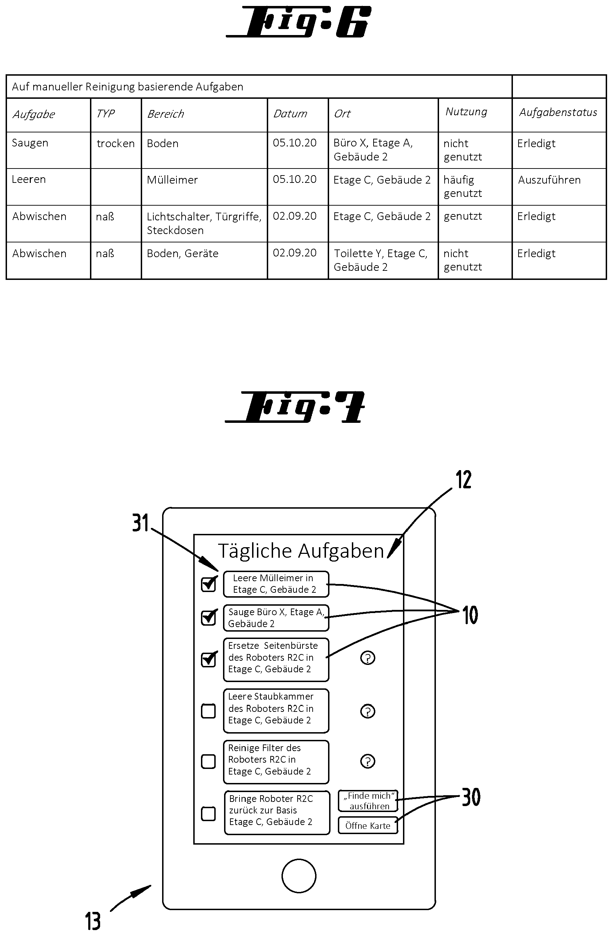

Je nach der Ausbildung der in dem System verwendeten Reinigungsgeräte 1 können Arbeitstätigkeiten 10 vollautomatisch durch die Reinigungsgeräte 1 ausgeführt werden, oder erfordern ein manuelles Zutun eines Nutzers bzw. einer Reinigungsperson. Die Recheneinrichtung 7 des Systems kann besonders bevorzugt dazu ausgebildet sein, zu prüfen, ob eine auszuführende Arbeitstätigkeit 10 durch eines oder mehrere der Reinigungsgeräte 1 ausgeführt werden kann, oder ob ein manuelles Einschreiten eines Menschen erforderlich ist. Dazu kann die Datenbank 8 des Systems, auf welche die Recheneinrichtung 7 zugreift, beispielsweise eine Mehrzahl von Referenztätigkeiten aufweisen, welche zum Vergleich mit auszuführenden Arbeitstätigkeiten 10 dienen. Die Recheneinrichtung 7 kann eine auszuführende Arbeitstätigkeit 10 somit mit der Vielzahl von definierten Referenztätigkeiten vergleichen und bei Übereinstimmung mit einer Referenztätigkeit, welche eine ausschließlich manuell auszuführende Arbeitstätigkeit 10 angibt, darauf schließen, dass diese Arbeitstätigkeit 10 manuell von einem Menschen ausgeführt werden muss. Entsprechend kann ein Nutzer des Systems über das Erfordernis einer manuellen Ausführung informiert werden, beispielsweise mit Hilfe des externen Endgerätes 13, über dessen Eingabe-Ausgabe-Schnittstelle 9 diese Information ausgegeben werden kann. Insbesondere kann die Eingabe-Ausgabe-Schnittstelle 9, sofern diese eine Displayfunktion beinhaltet, einen Arbeitsplan 12 (siehe Figur 7) anzeigen, welcher verschiedene Arbeitstätigkeiten 10 für den Nutzer oder Reinigungskräfte enthält. Hierzu wird später noch näher ausgeführt.

Zur Ausführung der Erfindung gibt ein Nutzer des Systems zunächst gemäß Figur 3 eine Mehrzahl von Arbeitsaufträgen 11 in beispielsweise das externe Endgerät 13 ein, um die Arbeitsaufträge 11 an die Recheneinrichtung 7 des Systems zu übermitteln. Jeder Arbeitsauftrag 11 beinhaltet eine bestimmte Arbeitstätigkeit 10, die an einem definierten Ort 22 der Umgebung ausgeführt werden soll. Der Arbeitsauftrag 11 wird durch verschiedene Parameter näher charakterisiert, nämlich zum einen die auszuführende Arbeitstätigkeit 10, nämlich hier beispielsweise ein Wischen oder Saugen einer Bodenfläche oder das Ausleeren eines Mülleimers. Eine bestimmte Arbeitstätigkeit 10 kann des Weiteren durch eine Unterart 24 charakterisiert sein, beispielsweise durch eine Angabe wie "nass" oder "trocken", so dass näher beschrieben ist, ob ein Wischen nass oder trocken erfolgen soll. Zudem ist in einer separaten Spalte auch ein Bereich 25 an einem Ort 22 der Umgebung zur Ausführung der Arbeitstätigkeit 10 angegeben, beispielsweise zu reinigende Möbel, Bodenflächen, Mülleimer, Lichtschalter oder andere. Darüber hinaus sind jeweils eine Wiederholfrequenz 26 und ein Ausführungszeitpunkt 27 angegeben. Eine Wiederholfrequenz 26 ist beispielsweise wöchentlich, monatlich, jährlich. Als Ausführungszeitpunkt 27 kann ein bestimmter Wochentag angegeben sein, eine bestimmte Woche in jedem Monat, ein Monat oder auch ein Datum und/oder eine Uhrzeit. Die letzte Spalte der dargestellten Tabelle gibt hier den jeweiligen Ort 22 zum Ausführen der Arbeitstätigkeit 10 an. Die Arbeitsaufträge 11 insgesamt können beispielsweise Teil einer Servicevereinbarung mit einem professionellen Reinigungsunternehmen sein, in welcher genau beschrieben ist, wann welche Reinigungstätigkeit an welchem Ort 22 auszuführen ist.

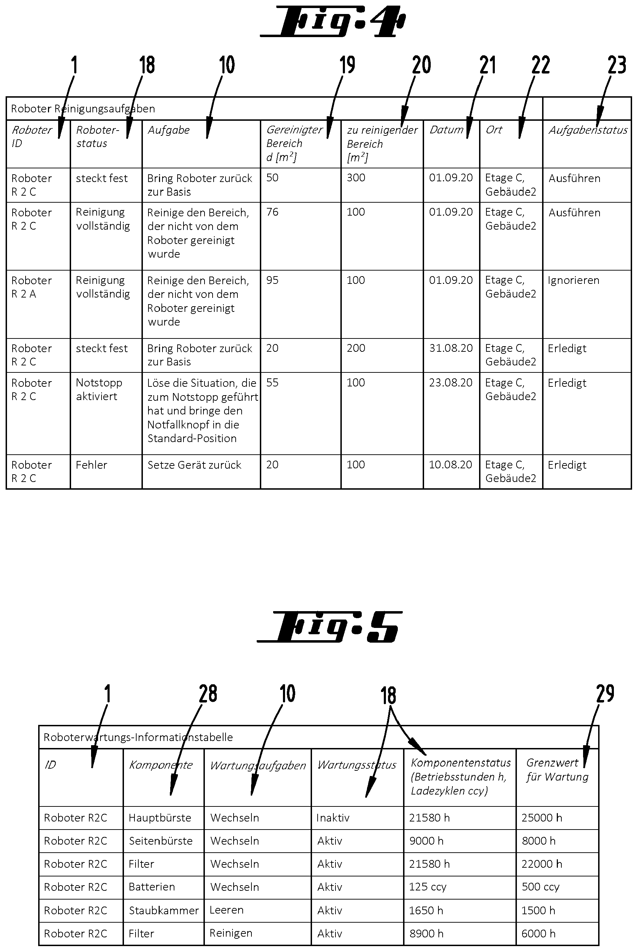

Figur 4 zeigt eine Tabelle mit Daten, die über Umgebungsparameter 17 der Umgebung oder Betriebsstatus 18 der in dem System arbeitenden Reinigungsgeräte 1 gesammelt sind. Zu diesem Zweck sammelt die Recheneinrichtung 7 Daten von verschiedenen Quellen, beispielsweise den Umgebungsdetektionseinrichtungen 2 der Reinigungsgeräte 1 selbst, sowie auch gegebenenfalls externen Umgebungsdetektionseinrichtungen 3, 4, 5, welche optional in dem System verwendet werden können. Die in Figur 4 dargestellte Tabelle, welche ebenfalls in der Datenbank 8 des Systems abgelegt ist, beinhaltet ein manuelles Eingreifen eines Menschen erfordernde Arbeitstätigkeiten 10, zum Beispiel Wartungstätigkeiten, die an den Reinigungsgeräten 1 auszuführen sind.

Die Statusdetektionseinrichtung 6 des jeweiligen Reinigungsgerätes 1 überwacht, ob beispielsweise eine Arbeitstätigkeit 10 noch gar nicht, teilweise oder vollständig ausgeführt ist, ob ein Fehlerstatus des Reinigungsgerätes 1 vorliegt oder ähnliches. Beispielsweise kann die Statusdetektionseinrichtung 6 feststellen, wenn eine Havariesituation vorliegt, d. h. das Reinigungsgerät 1 beispielsweise an einem Ort 22 der Umgebung feststeckt, oder ob ein Rad 14 oder ein Reinigungselement 15 blockiert ist, ob ein Ladestatus eines Akkumulators des Reinigungsgerätes 1 ausreicht, um eine Arbeitstätigkeit 10 vollständig auszuführen oder weiteres. Sofern ein detektierter Betriebsstatus 18 ein Fehlerstatus des Reinigungsgerätes 1 ist, kann in Folge dessen wiederum eine Arbeitstätigkeit 10 erforderlich sein, welche ein manuelles Mitwirken eines Menschen erfordert. Beispielsweise kann ein Betriebsstatus 18 des Reinigungsgerätes 1 erfordern, dass ein Nutzer das Reinigungsgerät 1 an einen anderen Ort 22 bringt, beispielsweise einen hindernisfreien Ort 22 oder einen Ort 22 einer Ladestation für den Akkumulator des Reinigungsgerätes 1. Jedes Mal, wenn beispielsweise ein Fehlerstatus eines Reinigungsgerätes 1 vorliegt, eine Arbeitstätigkeit 10 beendet ist oder eine Havariesituation besteht, erfolgt ein Eintrag in die in Figur 4 dargestellte Tabelle. Daraus folgen dann wiederum neue auszuführende Arbeitstätigkeiten 10. Beispielsweise ist zu der exemplarisch dargestellten obersten Arbeitstätigkeit 10 der Tabelle aufgelistet, dass der Roboter "R2C" feststeckt (Betriebsstatus 18), woraus die Arbeitstätigkeit 10 "bringe den Roboter zurück zu der Basisstation" resultiert. Des Weiteren ist eingetragen, dass das Reinigungsgerät 1 bereits eine gereinigte Fläche 19 von 50 m² bearbeitet hat, bevor der Havariefall aufgetreten ist. Die ganze zu reinigende Gesamtfläche 20 beträgt jedoch 300 m². Des Weiteren sind in der Tabelle noch das Datum 21 des Tabelleneintrags, der betreffende Ort 22, in dem die Arbeitstätigkeit 10 auszuführen ist, sowie der Arbeitsstatus 23 hinterlegt. Der Arbeitsstatus 23 "to do" gibt hier an, dass die Arbeitstätigkeit 10 noch erledigt werden muss, da 250 m² von der 300 m² Gesamtfläche 20 noch nicht bearbeitet wurden.

Die Figur 5 zeigt eine weitere Tabelle, welche ebenfalls in der Datenbank 8 des Systems hinterlegt ist. Diese Tabelle weist Wartungstätigkeiten auf, welche an einem oder mehreren Reinigungsgeräten 1 vorzunehmen sind. Übliche Wartungstätigkeiten an einem Reinigungsgerät 1 sind beispielsweise Wartungen an Komponenten 28 wie Hauptbürste, Seitenbürste, Filter, Batterie, Staubbehälter oder andere. Die Wartungsarbeiten sind Arbeitstätigkeiten 10, die sich auf einen Wechsel oder eine Reinigung einer Komponente 28 beziehen. Zur Formulierung der Arbeitstätigkeiten 10 verfügt die Recheneinrichtung 7 über entsprechende Informationen darüber, welche Lebensdauer die Komponenten 28 aufweisen bzw. welchen Verschmutzungszustand eine Komponente 28 wie beispielsweise ein Staubbehälter oder ein Filter hat. Die zweite Zeile der Tabelle gibt beispielsweise an, dass das Reinigungselement 15 "Seitenbürste" des Roboters "R2C" nach einer Betriebsdauer (Referenzwert 29) von 8000 Stunden gewechselt werden muss. Der Betriebsstatus 18 des Reinigungsgerätes 1 gibt jedoch bereits eine Einsatzzeit von "9000 Stunden" an, so dass der Betriebsstatus 18 (Wartungsstatus) auf "aktiv" gesetzt ist. Dies bedeutet, dass das Reinigungselement 15 möglichst unverzüglich auszutauschen ist. Die Referenzwerte 29 können beispielsweise durch einen Nutzer des Systems definiert sein. Hierzu kann der Nutzer beispielsweise mittels einer auf seinem externen Endgerät 13 installierten Applikation entsprechende Eintragungen vornehmen. Sobald ein Nutzer die auszuwechselnde Komponente 28 des Reinigungsgerätes 1 gewartet hat, wird der Betriebsstatus 18 entsprechend auf "inaktiv" zurückgesetzt. Das Zurücksetzen kann ebenfalls manuell über die Applikation erfolgen. Alternativ kann jedoch auch eine Detektionseinrichtung des Reinigungsgerätes 1 automatisch feststellen, wenn die Wartungstätigkeit erfolgreich ausgeführt wurde. Anhand der fortgeführten Tabelle werden die auszuführenden Arbeitstätigkeiten 10 zur Wartung der Reinigungsgeräte 1 stets aktualisiert.

Figur 6 zeigt eine weitere Tabelle, welche Arbeitstätigkeiten 10 angibt, die in Abhängigkeit von einem von einer Umgebungsdetektionseinrichtung 2, 3, 4, 5 detektierten Umgebungsparameter 17 erforderlich sind. Gemäß dieser Ausgestaltung können Umgebungsdetektionseinrichtungen 2, 3, 4, 5 des Systems, wie beispielsweise Schmutzsensoren, Bewegungssensoren, Schließsensoren an Türen oder Fenstern, Sensoren, die eine Betätigung eines Lichtschalters oder ähnliches überwachen, dazu dienen, eine Verschmutzung oder Nutzung bestimmter Orte 22 der Umgebung, die den Standorten der Umgebungsdetektionseinrichtung 2, 3, 4, 5 zugeordnet sind, zu überwachen. In modernen Büroumgebungen wird beispielsweise eine Lichtsteuerung genutzt, um eine Anwesenheit von Personen innerhalb bestimmter Räume zu detektieren. Die automatische Lichtsteuerung wird zum Beispiel durch Bewegungssensoren erreicht, welche notwendige Informationen darüber geben, welche Orte 22 tatsächlich benutzt wurden und somit gereinigt werden sollten, welche Verbrauchsmaterialien an einem bestimmten Ort 22 zu ersetzen sind, ob Türen oder Fenster geschlossen werden müssen oder ähnliches. Weiter detailliert kann eine Umgebungsdetektionseinrichtung 2, 3, 4, 5 bzw. eine Recheneinrichtung 7 des Systems daraus auch Rückschlüsse darauf ziehen, ob eine bestimmte Nutzung regelmäßig erfolgt. Der in die Tabelle eingetragene Umgebungsparameter 17 gibt an, ob der entsprechende Ort 22 der Umgebung benutzt wurde oder nicht. Orte 22, welche den Umgebungsparameter 17 "used" aufweisen und noch nicht gereinigt wurden, erhalten den Arbeitsstatus 23 "to do" für die entsprechende Arbeitstätigkeit 10, beispielsweise ein Saugreinigen eines Ortes 22, das Leeren eines Mülleimers oder andere.

Anhand der zuvor dargestellten Tabellen der Figuren 3 bis 6 können dann Arbeitstätigkeiten 10 für Reinigungsgeräte 1 sowie Arbeitstätigkeiten 10, die manuell durch eine Reinigungsperson ausgeführt werden müssen, definiert werden. Wenn ein Fehlerstatus oder Havariestatus eines Reinigungsgerätes 1 vorliegt, wird die Arbeitstätigkeit 10 vorzugsweise stets auf "to do" gesetzt, so dass definiert ist, dass diese Arbeitstätigkeit 10 noch ausgeführt werden muss. Sofern Arbeitstätigkeiten 10 begonnen, aber nicht vollständig zu Ende geführt wurden, kann abhängig von einem Grad der Vollendung der Arbeitstätigkeit 10 unterschieden werden, ob der Status auf "to do" oder "done" gesetzt wird. Wenn ein Reinigungsgerät 1 beispielsweise eine Reinigung beendet hat, aber die tatsächlich gereinigte Fläche 19 geringer ist als eine zu reinigende Gesamtfläche 20, kann der Status beispielsweise auf "to do" gesetzt werden, wenn ein bestimmter Mindestanteil nicht erreicht ist, beispielsweise weniger als 95 Prozent der Gesamtfläche 20 gereinigt wurde. Sofern demgegenüber mehr als 95 Prozent der Fläche gereinigt wurde, ist der Status "erledigt" ("done"). Bezüglich der fälligen Wartungstätigkeiten kann ein Nutzer vorzugsweise selbst einstellen, ob er über fällige Wartungstätigkeiten informiert werden möchte oder nicht. Nur wenn eine Benachrichtigung aktiv angefordert wird, kann der Nutzer beispielsweise über sein externes Endgerät 13 über eine dementsprechend auszuführende Arbeitstätigkeit 10 informiert werden.

Aus der Menge der in einem bestimmten Zeitabschnitt innerhalb der Umgebung auszuführenden Arbeitstätigkeiten 10 kann die Recheneinrichtung 7 des Systems beispielsweise diejenigen Arbeitstätigkeiten 10 rausfiltern, welche manuell durch einen Nutzer oder Reinigungspersonal des Systems ausgeführt werden müssen. Für diese Arbeitstätigkeiten 10 kann dann ein Arbeitsplan 12 gemäß Figur 7 erstellt werden, welcher lediglich die durch einen Menschen auszuführenden Arbeitstätigkeiten 10 beinhaltet. Selbstverständlich ist es jedoch auch möglich, dass automatisch auszuführende Arbeitstätigkeiten 10 ebenfalls aufgelistet sind, weil ein Nutzer zur Initialisierung der Arbeitstätigkeit 10 beispielsweise einen Startknopf an einem Reinigungsgerät 1 betätigen muss. Der Arbeitsplan 12 wird aus der Vielzahl von Arbeitstätigkeiten 10 erstellt, welche den Arbeitsstatus 23 "zu erledigen/to do" aufweisen. Der Arbeitsplan 12 kann des Weiteren personenbezogen definiert sein, d. h. es werden nur diejenigen Arbeitstätigkeiten 10 aufgelistet, welche durch eine bestimmte Person ausgeführt werden dürfen. Entsprechend können in der Datenbank 8 Berechtigungen für die Nutzer des Systems hinterlegt sein.

Vorzugsweise wird eine Arbeitstätigkeit 10 aus dem Arbeitsplan 12 entfernt, sobald die Arbeitstätigkeit 10 erledigt ist. Der Nutzer kann eine Arbeitstätigkeit 2 über die Eingabe-Ausgabe-Schnittstelle 9 seines externen Endgerätes 13 als erledigt markieren. Die in Figur 7 beispielhaft auf der Eingabe-Ausgabe-Schnittstelle 9 aufgelisteten Arbeitstätigkeiten 10 könnten zusätzlich nach der Art der Arbeitstätigkeit 10 getrennt aufgelistet sein, beispielsweise nach automatisch auszuführenden Arbeitstätigkeiten 10 und manuell auszuführenden Arbeitstätigkeiten 10. Auf dem Display des externen Endgerätes 13 können des Weiteren beispielsweise zusätzliche Betätigungselemente 30 dargestellt sein, welche zum Abrufen bestimmter Informationen für den Nutzer dienen. Zu einer oder mehreren Aufforderungen 31, welche eine auszuführende Arbeitstätigkeit 10 betreffen, kann der Nutzer beispielsweise ein Betätigungselement 30 "Play find me" oder "Open map" betätigen, so dass beispielsweise Informationen ausgegeben werden, die dem Nutzer einen Hinweis darüber geben, wo sich das Reinigungsgerät 1 derzeit befindet. Beispielsweise kann das Reinigungsgerät 1 nach Drücken des entsprechenden Betätigungselementes 30 einen Ton abgeben, welcher es dem Nutzer ermöglicht, das Reinigungsgerät 1 aufzufinden. Darüber hinaus kann auch eine Umgebungskarte geöffnet werden, welche dem Nutzer einen aktuellen Ort 22 des Reinigungsgerätes 1 in der Umgebung anzeigt. Darüber hinaus können auch Informationen darüber angezeigt werden, wie eine Komponente 28 im Rahmen einer Wartungstätigkeit gereinigt oder ausgetauscht werden kann. Darüber hinaus können die Aufforderungen 31 auch derart gewichtet sein, dass diese mit einem Prioritätsvermerk versehen sind. Beispielsweise können die Aufforderungen 31 in einer bestimmten Farbe nach einem Ampelsystem angezeigt werden, beispielsweise rot für dringlich, gelb für etwas eiliger und grün für Arbeitstätigkeiten 10, die gelegentlich auszuführen sind, jedoch nicht besonders dringend sind. Arbeitstätigkeiten 10, die aufgrund eines Fehlers oder einer Havariesituation des Reinigungsgerätes 1 auszuführen sind, können dabei als dringlich angegeben werden, regelmäßige Arbeitstätigkeiten 10 zu Wartungszwecken können als gelegentlich auszuführende Arbeitstätigkeiten 10 vermerkt sein. Übliche Reinigungstätigkeiten können des Weiteren als etwas eiliger definiert sein.

**Liste der Bezugszeichen**

| | | | |
|---|---|---|---|
| 1 | Reinigungsgerät | 26 | Wiederholfrequenz |
| 2 | Umgebungsdetektionseinrichtung | 27 | Ausführungszeitpunkt |
| 3 | Umgebungsdetektionseinrichtung | 28 | Komponente |
| 4 | Umgebungsdetektionseinrichtung | 29 | Referenzwert |
| 5 | Umgebungsdetektionseinrichtung | 30 | Betätigungselement |
| 6 | Statusdetektionseinrichtung | 31 | Aufforderung |
| 7 | Recheneinrichtung | | |
| 8 | Datenbank | | |
| 9 | Eingabe-Ausgabe-Schnittstelle | | |
| 10 | Arbeitstätigkeit | | |
| 11 | Arbeitsauftrag | | |
| 12 | Arbeitsplan | | |
| 13 | Externes Endgerät | | |
| 14 | Rad | | |
| 15 | Reinigungselement | | |
| 16 | Navigationseinrichtung | | |
| 17 | Umgebungsparameter | | |
| 18 | Betriebsstatus | | |
| 19 | Gereinigte Fläche | | |
| 20 | Gesamtfläche | | |
| 21 | Datum | | |
| 22 | Ort | | |
| 23 | Arbeitsstatus | | |
| 24 | Unterart | | |
| 25 | Bereich | | |

## Patentansprüche

1. System zum Reinigen einer Umgebung, mit mindestens einem sich selbsttätig fortbewegenden Reinigungsgerät (1), welches eine Statusdetektionseinrichtung (6) zur Detektion eines Betriebsstatus (18) des Reinigungsgerätes (1) aufweist, mindestens einer Umgebungsdetektionseinrichtung (2, 3, 4, 5) zur Detektion eines Umgebungsparameters der Umgebung, einer Recheneinrichtung (7) zum Definieren einer auszuführenden Arbeitstätigkeit (10) in Abhängigkeit von dem detektierten Umgebungsparameter (17) und/oder dem detektierten Betriebsstatus (18), und einer Datenbank (8) zur Speicherung der auszuführenden Arbeitstätigkeit (10), **dadurch gekennzeichnet, dass** das System eine mit der Recheneinrichtung (7) in Kommunikationsverbindung stehende Eingabe-Ausgabe-Schnittstelle (9) aufweist, **dadurch gekennzeichnet, dass** die Eingabe-Ausgabe-Schnittstelle (9) eingerichtet ist, mindestens einen, eine auszuführende Arbeitstätigkeit (10) betreffenden Arbeitsauftrag (11) von einem Nutzer des Systems zu empfangen, wobei die Recheneinrichtung (7) eingerichtet ist, eine Gesamtheit der anhand der Umgebungsparameter und/oder Betriebsstatus definierten Arbeitstätigkeiten (10) und der über die Eingabe-Ausgabe-Schnittstelle empfangenen Arbeitsaufträge (11) im Hinblick auf einen Ausführungszeitpunkt (27) der auszuführenden Arbeitstätigkeiten (10) zu analysieren und einen Arbeitsplan (12), welcher von einem Nutzer in einem bestimmten Zeitabschnitt manuell auszuführende Arbeitstätigkeiten (10) definiert, zu erstellen und mittels der Eingabe-Ausgabe-Schnittstelle (9) an den Nutzer auszugeben, wobei die Recheneinrichtung (7) eingerichtet ist, die Gesamtheit der Arbeitstätigkeiten (10) zu filtern und eine erste Tätigkeitsmenge zu definieren, welche mindestens eine von dem mindestens einen Reinigungsgerät (1) automatisch ausführbare Arbeitstätigkeit (10) umfasst, und eine zweite Tätigkeitsmenge zu definieren, welche mindestens eine ausschließlich manuell durch einen Nutzer auszuführende Arbeitstätigkeit (10) umfasst.

2. System nach Anspruch 1, **dadurch gekennzeichnet, dass** die Datenbank (8) eine Datei aufweist, in welcher Referenztätigkeiten für manuell auszuführende Arbeitstätigkeiten (10) und Referenztätigkeiten für automatisch ausführbare Arbeitstätigkeiten (10) gespeichert sind, wobei die Recheneinrichtung (7) eingerichtet ist, eine auszuführende Arbeitstätigkeit (10) mit den gespeicherten Referenztätigkeiten zu vergleichen und bei Übereinstimmung der Arbeitstätigkeit (10) mit einer der Referenztätigkeiten auf eine manuell auszuführende Arbeitstätigkeit (10) oder eine automatisch ausführbare Arbeitstätigkeit (10) zu schließen.

3. System nach Anspruch 1 oder 2, **dadurch gekennzeichnet, dass** die Recheneinrichtung (7) eingerichtet ist, den Nutzer mittels der Eingabe-Ausgabe-Schnittstelle (9) zu einer ausschließlich manuell auszuführenden Arbeitstätigkeit (10) aufzufordern.

4. System nach einem der vorhergehenden Ansprüche, **dadurch gekennzeichnet, dass** die Recheneinrichtung (7) eingerichtet ist, eine automatisch auszuführende zweite Arbeitstätigkeit (10) des Reinigungsgerätes (1) in Abhängigkeit von einem aufgrund einer von einem Nutzer durchgeführten ersten Arbeitstätigkeit (10) geänderten Umgebungsparameter (17) anzupassen.

5. System nach einem der vorhergehenden Ansprüche, **dadurch gekennzeichnet, dass** die Recheneinrichtung (7) eingerichtet ist, in Abhängigkeit von einem aktuellen Betriebsstatus (18) des Reinigungsgerätes (1) eine manuell auszuführende Arbeitstätigkeit (10) von einem Nutzer anzufordern, indem die Recheneinrichtung (7) die Eingabe-Ausgabe-Schnittstelle (9) zur Ausgabe einer Aufforderung (31) zur Ausführung der manuellen Arbeitstätigkeit (10) veranlasst.

6. System nach einem der vorhergehenden Ansprüche, **dadurch gekennzeichnet, dass** die manuell auszuführende Arbeitstätigkeit (10) eine Servicetätigkeit für das Reinigungsgerät (1) ist, insbesondere ein Bereitstellen von Verbrauchsmaterial in der Umgebung oder eine Übergabe von Verbrauchsmaterial an das Reinigungsgerät (1), eine Annahme von durch das Reinigungsgerät (1) in der Umgebung gesammeltem Material, ein Befreien des Reinigungsgerätes (1) aus einer festgefahrenen Position, ein Tragen des Reinigungsgerätes (1) zu einer Basisstation, ein Wechseln oder Reinigen einer Komponente (28) des Reinigungsgerätes (1).

7. System nach einem der vorhergehenden Ansprüche, **dadurch gekennzeichnet, dass** die manuell auszuführende Arbeitstätigkeit (10) eine Reinigungstätigkeit zur Reinigung der Umgebung ist, insbesondere eine Reinigung einer Überbodenfläche und/oder eine Reinigung einer für das Reinigungsgerät (1) nicht zugänglichen Fläche.

8. System nach einem der vorhergehenden Ansprüche, **dadurch gekennzeichnet, dass** die Umgebungsdetektionseinrichtung (2, 3, 4, 5) eingerichtet ist, als Umgebungsparameter eine momentan stattfindende Nutzung zumindest eines Ortes (22) der Umgebung zu detektieren.

9. System nach einem der vorhergehenden Ansprüche, **dadurch gekennzeichnet, dass** die Umgebungsdetektionseinrichtung (2, 3, 4, 5) einen Anwesenheitssensor und/oder einen Bewegungssensor und/oder einen Durchgangssensor und/oder einen Ortungssensor für Mobilgeräte aufweist.

## Claims

1. A system for cleaning an environment, comprising at least one self-propelled cleaning device (1) having a status detection means (6) for detecting an operating status (18) of the cleaning device (1), at least one environment detection means (2, 3, 4, 5) for detecting an environmental parameter of the environment, a computing means (7) for defining a work activity (10) to be performed in dependence on the detected environmental parameter (17) and/or the detected operating status (18), and a database (8) for storing the work activity (10) to be performed, **characterized in that** the system has an input/output interface (9) which is in communication with the computing device (7), **characterized in that** the input/output interface (9) is set up to receive at least one work order (11) relating to a work activity (10) to be performed from a user of the system, the computing device (7) being set up to analyze a totality of the work activities (10) defined on the basis of the environment parameters and/or operating status and of the work orders (11) received via the input/output interface with regard to an execution time (27) of the work activities (10) to be executed, and to generate a work schedule (12) which defines work activities (10) to be executed manually by a user in a specific time period, and to output it to the user by means of the input/output interface (9), the computing device (7) being set up to filter the totality of the work activities (10) and to define a first set of activities which comprises at least one work activity (10) which can be carried out automatically by the at least one cleaning device (1), and to define a second set of activities which comprises at least one work activity (10) which is to be carried out exclusively manually by a user.

2. System according to claim 1, **characterized in that** the database (8) has a file in which reference activities for manually executable work activities (10) and reference activities for automatically executable work activities (10) are stored, the computing device (7) being set up to compare a work activity (10) to be executed with the stored reference activities and, in the event of correspondence between the work activity (10) and one of the reference activities, to conclude that a work activity (10) is to be executed manually or that a work activity (10) is automatically executable.

3. System according to claim 1 or 2, **characterized in that** the computing device (7) is arranged to prompt the user by means of the input/ output interface (9) to perform a work activity (10) exclusively manually.

4. System according to one of the preceding claims, **characterized in that** the computing device (7) is set up to adapt a second work activity (10), which is to be carried out automatically, of the cleaning device (1) as a function of an environmental parameter (17) which has been changed on the basis of a first work activity (10) carried out by a user.

5. System according to one of the preceding claims, **characterized in that** the computing device (7) is set up to request a work activity (10) to be carried out manually by a user as a function of a current operating status (18) of the cleaning device (1), **in that** the computing device (7) causes the input/output interface (9) to output a request (31) for carrying out the manual work activity (10).

6. System according to one of the preceding claims, **characterized in that** the work activity (10) to be performed manually is a service activity for the cleaning device (1), in particular a provision of consumable material in the environment or a transfer of consumable material to the cleaning device (1), an acceptance of material collected by the cleaning device (1) in the environment, a freeing of the cleaning device (1) from a stuck position, a carrying of the cleaning device (1) to a base station, a changing or cleaning of a component (28) of the cleaning device (1).

7. System according to one of the preceding claims, **characterized in that** the work activity (10) to be performed manually is a cleaning activity for cleaning the environment, in particular a cleaning of an overfloor surface and/or a cleaning of a surface not accessible for the cleaning device (1).

8. System according to one of the preceding claims, **characterized in that** the environment detection device (2, 3, 4, 5) is arranged to detect, as an environment parameter, a currently occurring use of at least one location (22) of the environment.

9. System according to any one of the preceding claims, **characterized in that** the environment detection device (2, 3, 4, 5) comprises a presence sensor and/or a movement sensor and/or a passage sensor and/or a location sensor for mobile devices.

## Revendications

1. Système de nettoyage d'un environnement, comprenant au moins un appareil de nettoyage (1) se déplaçant de manière autonome, qui comprend un dispositif de détection d'état (6) pour détecter un état de fonctionnement (18) de l'appareil de nettoyage (1), au moins un dispositif de détection d'environnement (2, 3, 4, 5) pour détecter un paramètre d'environnement de l'environnement, un dispositif de calcul (7) pour définir une activité de travail (10) à exécuter en fonction du paramètre d'environnement (17) détecté et/ou de l'état de fonctionnement (18) détecté, et une base de données (8) pour mémoriser l'activité de travail (10) à exécuter, **caractérisé en ce que** le système comporte une interface d'entrée/sortie (9) en liaison de communication avec le dispositif de calcul (7), **caractérisé en ce que** l'interface d'entrée/sortie (9) est agencée pour recevoir d'un utilisateur du système au moins un ordre de travail (11) concernant une activité de travail (10) à exécuter, le dispositif de calcul (7) étant agencé pour analyser l'ensemble des activités de travail (10) définies à l'aide des paramètres environnementaux et/ou de l'état de fonctionnement et des ordres de travail (11) reçus par l'intermédiaire de l'interface d'entrée/sortie en vue d'un moment d'exécution (27) des activités de travail (10) à exécuter et pour établir un plan de travail (12) définissant les activités de travail (10) à exécuter manuellement par un utilisateur dans un intervalle de temps déterminé, et de le délivrer à l'utilisateur au moyen de l'interface d'entrée/ sortie (9), le dispositif de calcul (7) étant conçu pour filtrer l'ensemble des activités de travail (10) et pour définir un premier ensemble d'activités qui comprend au moins une activité de travail (10) pouvant être exécutée automatiquement par l'au moins un appareil de nettoyage (1) et un deuxième ensemble d'activités qui comprend au moins une activité de travail (10) devant être exécutée exclusivement manuellement par un utilisateur.

2. Système selon la revendication 1, **caractérisé en ce que** la base de données (8) comporte un fichier dans lequel sont mémorisées des activités de référence pour des activités de travail (10) à exécuter manuellement et des activités de référence pour des activités de travail (10) exécutables automatiquement, le dispositif de calcul (7) étant conçu pour comparer une activité de travail (10) à exécuter avec les activités de référence mémorisées et, en cas de concordance de l'activité de travail (10) avec l'une des activités de référence, pour conclure à une activité de travail (10) à exécuter manuellement ou à une activité de travail (10) exécutable automatiquement.

3. Système selon la revendication 1 ou 2, **caractérisé en ce que** le dispositif de calcul (7) est agencé pour demander à l'utilisateur, au moyen de l'interface d'entrée/sortie (9), d'effectuer une activité de travail (10) exclusivement manuelle.

4. Système selon l'une des revendications précédentes, **caractérisé en ce que** le dispositif de calcul (7) est agencé pour adapter une deuxième activité de travail (10) de l'appareil de nettoyage (1) à exécuter automatiquement en fonction d'un paramètre d'environnement (17) modifié sur la base d'une première activité de travail (10) exécutée par un utilisateur.

5. Système selon l'une des revendications précédentes, **caractérisé en ce que** le dispositif de calcul (7) est agencé pour demander à un utilisateur, en fonction d'un état de fonctionnement actuel (18) de l'appareil de nettoyage (1), une activité de travail (10) à exécuter manuellement, **en ce que** le dispositif de calcul (7) fait en sorte que l'interface d'entrée/sortie (9) émette une demande (31) d'exécution de l'activité de travail manuelle (10).

6. Système selon l'une des revendications précédentes, **caractérisé en ce que** l'activité de travail (10) à effectuer manuellement est une activité de service pour l'appareil de nettoyage (1), notamment une mise à disposition de consommables dans l'environnement ou un transfert de consommables vers l'appareil de nettoyage (1), une réception de matériaux collectés par l'appareil de nettoyage (1) dans l'environnement, un dégagement de l'appareil de nettoyage (1) d'une position bloquée, un transport de l'appareil de nettoyage (1) vers une station de base, un changement ou un nettoyage d'un composant (28) de l'appareil de nettoyage (1).

7. Système selon l'une des revendications précédentes, **caractérisé en ce que** l'activité de travail (10) à effectuer manuellement est une activité de nettoyage de l'environnement, notamment un nettoyage d'une surface hors sol et/ou un nettoyage d'une surface non accessible à l'appareil de nettoyage (1).

8. Système selon l'une des revendications précédentes, **caractérisé en ce que** le dispositif de détection d'environnement (2, 3, 4, 5) est agencé pour détecter, en tant que paramètre d'environnement, une utilisation momentanée d'au moins un lieu (22) de l'environnement.

9. Système selon l'une des revendications précédentes, **caractérisé en ce que** le dispositif de détection d'environnement (2, 3, 4, 5) comprend un capteur de présence et/ou un capteur de mouvement et/ou un capteur de passage et/ou un capteur de localisation pour appareils mobiles.
